# EUROPEAN PATENT APPLICATION

(11) **EP 3 016 050 A1**
(43) Date of publication of application: **04.05.2016**
(21) Application number: 14190900.2
(22) Date of filing: 29.10.2014
(51) Int. Cl.: G06Q 20/02, H04L 29/08

(54) **System and method for handling a payment link**

(71) Applicant: SNS Bank N.V., 3521 BJ Utrecht (NL)
(72) Inventor: ter Gunne, Ties Pull, 3521 BJ Utrecht (NL)
(74) Representative: Nederlandsch Octrooibureau

(57) **Abstract**

A system for handling a payment link comprises a redirection server. The redirection server stores a plurality of addresses of servers or custom URL schemes of respective institutes, receives a request from a client device according to a first payment link comprising information relating to a payment, the information including at least an identification of a bank account of a beneficiary of the payment, and redirects the client device to a selected institute of the respective institutes according to a second payment link comprising the address of the server or the custom URL scheme of the selected institute, wherein the second payment link further comprises the information relating to the payment. A single payment link can be used to perform a payment using any one of several different institutes, without using an intermediate payment provider.

## Description

### FIELD OF THE INVENTION

The invention relates to handling a payment link.

### BACKGROUND OF THE INVENTION

In recent years, progress has been made in electronic banking. Customers can perform financial transactions using a secure online electronic banking environment that is provided by the institute where they maintain a bank account. Such transactions may include transfer of money from the customer's bank account to a bank account of someone else, who may be a private person or a company.

For companies, payment systems have been developed which enable secure payment of digital products or physical products ordered via web shops.

However, the existing payment systems can cause inconvenience to users and are technically complex to implement, and therefore it would be desirable to provide an improved payment system.

### SUMMARY OF THE INVENTION

The present invention aims at overcoming the above-mentioned problem by providing an improved payment system.

In a first aspect, the invention provides a system for handling a payment link. The system comprises a redirection server. This redirection server, which may be a Web server, is configured for:
storing a plurality of addresses of servers and/or custom URL schemes of respective institutes;
receiving a request from a client device according to a first payment link comprising information relating to a payment, the information including at least an identification of a bank account of a beneficiary of the payment; and
redirecting the client device to a selected institute of the respective institutes according to a second payment link comprising the address of the server or the custom URL scheme of the selected institute, wherein the second payment link further comprises the information relating to the payment.

The redirection server allows a single payment link to be used by all bank account holders, regardless of what bank they use for their bank account. Moreover, only a minimal amount of cooperation is needed between the independent banking institutes to allow the system to operate, because the information relating to the payment is included in the second payment link. Therefore, there is no need for communications between the redirection server and the banking institutes. The banking institutes merely need to provide servers and/or apps that support the format of the payment information of the second payment link. For the rest, the whole transaction is performed within the online banking environment of the selected institute. Surprisingly, this system can be used to enhance security and/or reduce complexity. Further, user convenience is improved, because a single payment link can be used by everybody regardless of the banking institute, even without having to deal with an intermediary payment provider.

The second payment link may comprise an exact copy of the information relating to the payment included in the first payment link. This allows a transparent and relatively simple system.

The request may comprise a HTTP request containing the information in a resource or query portion of the HTTP request. Further, the step of redirecting may comprise issuing a HTTP redirect response to the client device, the HTTP redirect response comprising:
the location (e.g. network address or internet address) of the server of the selected institute or a custom URL scheme, and
the information relating to the transaction in a resource or query portion of the HTTP redirect response. Such a redirect response is easy to process by client devices and servers or applications of the banking intitutes.

The information relating to the payment may be encrypted, and the redirected request may comprise a copy of the encrypted information. This allows the payment into be transmitted to the institute securely. Moreover; it allows the payment information to be unknown to the redirection server.

The HTTP redirect may comprise a literal copy of the information relating to the transaction. This enhances the transparency of the system.

The redirection server may be configured to send a list of the plurality of institutes to the client device, to select the selected institute using the client device. The client device may store information about its user, such as the bank institute of the user. Also, the client device may display a menu So that the user may select an institute.

The system may comprise the servers of the respective institutes. Each of the servers of the respective institutes and the redirection server may be configured to accept a common format for encoding information relating to a payment in a payment link. This is particularly efficient because all of the servers accept the same format, allowing the redirection server to redirect the request using the same format.

Each of the servers of the respective institutes may be configured to, upon receiving a payment link comprising valid information in the common format for encoding information relating to a payment, display a user interactive form for correcting, supplementing, and/or confirming the payment information by the client device, and perform the payment if a user of the client device is authenticated as an account holder at the respective institute. This allows payment to be performed uniformly by a plurality of independent banking institutes.

The HTTP redirect may comprise the custom URL scheme of the selected institute. This HTTP redirect may be configured to redirect the client device to an application installed on the client device, wherein the application is configured to, upon receiving a payment link comprising valid information in the common format for encoding information relating to a payment, display a user interactive form for correcting, supplementing, and/or confirming the payment information by the client device, and perform the payment if a user of the client device is authenticated as an account holder at the respective institute. This allows payment links to be treated in a uniform way by applications of different independent institutes.

According to another aspect of the invention, a method of handling a payment link is provided. The method comprises:
storing a plurality of addresses of servers of respective institutes;
receiving a request from a client device according to a first payment link comprising information relating to a payment, the information including at least an identification of a bank account of a beneficiary of the payment; and
redirecting the client device to the server of a selected institute of the respective institutes according to a second payment link comprising the address of the server of the selected institute and the information relating to the payment.

Another aspect of the invention provides a computer program product comprising instructions for causing a computer system to perform the method set forth herein.

The person skilled in the art will understand that the features described above may be combined in any way deemed useful. Moreover, modifications and variations described in respect of the system may likewise be applied to the method and to the computer program product, and modifications and variations described in respect of the method may likewise be applied to the system and to the computer program product.

### BRIEF DESCRIPTION OF THE DRAWINGS

In the following, aspects of the invention will be elucidated by means of examples, with reference to the drawings. The drawings are diagrammatic and may not be drawn to scale.
Fig. 1 is a block diagram of a system for handling a payment link.
Fig. 2 is a diagram of components of a payment link.
Fig. 3 is a flow chart of a method of handling a payment link.

### DETAILED DESCRIPTION OF EMBODIMENTS

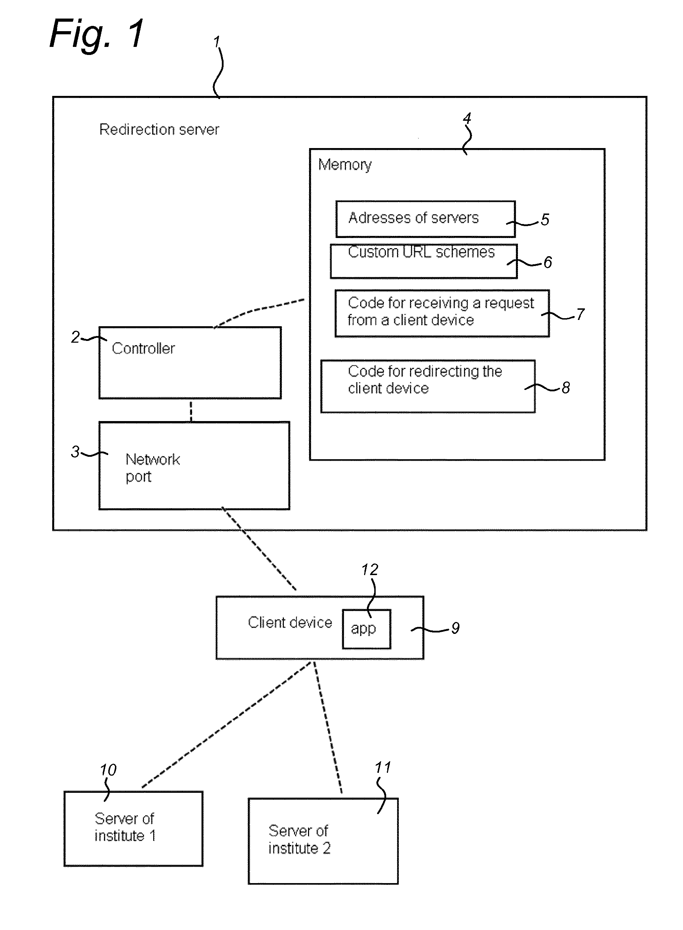

Fig. 1 shows a diagram of a system for handling a payment link. The diagram shows a client device 9, two servers of different institutes 10 and 11, and a redirection server 1. Although many client devices will in general be present, only one client device 9 has been drawn to illustrate the principle of the payment system. The client device 9 is generally owned/used by an account holder who desires to perform a payment. Moreover, in general there can be any number of institutes who host their servers. Two servers 10 and 11 have been drawn to explain the principles of the system. There can also be more than one redirection server, although only one redirection server 1 has been drawn. One redirection server can in principle service any number of client devices and/or servers, but for several reasons, such as scalability, it may be desired to have more than one.

The servers 10, 11 each host a banking environment that allows clients to perform financial transactions. Moreover, these servers 10, 11 may also provide more functionality in their banking environments, such as digital access to account information, historic transactions, savings account transactions, and any further service provided by online banking environments. These servers may be computers that are connected to the client devices through the Internet. Moreover, these servers may be further connected to database systems of the institute. The servers 10, 11 may host Web sites that provide the above-described access to online banking environment by means of a URL and a Web browser that runs on the client device 9.

Further, the server 10 may be configured to communicate with a specific application 12 (app) that is installed on the client device 9. For example, this application 12 is specific for the server 10 and provided by server 10's institute, so that application 12 cannot be used in conjunction with servers of other institutes, such as server 11. However, this is not a limitation, as applications could be developed that can be used in conjunction with several institutes.

The servers 10 and 11 may provide access to a secure online banking environment, e.g. through a URL https://my.bank1.com for server 10 of the first institute, and https://my.bank2.com for server 11 of the second institute.

In addition to, or instead of, such a general URL for access to an online banking environment, the servers 10 and 11 may support a specific payment link format, which enables payments to be performed more quickly. For example, the resource and/or query portions of a URL can be used to specify details of a particular transaction, such as the recipient of the transaction and/or the amount. For example, the format of the portion of the URL which specifies the transaction details may be the same for a plurality of otherwise independent banking institutes.

For example, a URL to transfer an amount of 100 euro to bank account 1234 could be expressed for a payer who uses bank 1 as:
https://my.bank1.com/paymentlink?to= 1234&amount=100euro.
   The same transaction, to be paid by an accountholder of bank 2 would become:
https://my.bank2.com/paymentlink?to=1234&amount=100euro.

Such a payment link can be easily constructed by potential receivers of money, whether they are a company or a private person, but the link is specific for a particular banking institute of the potential payer.

Redirection server 1 can be configured to accept URLs at a different domain name, for example paymentlink.com. The redirection server could accept the URL with the payment details in the same format as the individual banks, for example https://my.paymentlink.com/paymentlink?to=1234&amount=100euro. The redirection server 1 is configured to redirect such a payment URL to a server or application of a suitable banking institute, in particular the banking institute of the payer. To that end, the redirection server 1 is configured to redirect the client device 9 to a URL having the domain name of the server of that bank, wherein the URL contains the payment details of the transaction. Thus, depending on the selected banking institute, the redirection server may, in response to a HTTP request corresponding to the URL https://my.paymentlink.com/paymentlink?to=1234&amount=100euro, redirect the client device 9 to either https://my.bank1.com/paymentlink?to=1234&amount=100euro or https://my.bank2.com/paymentlink?to=1234&amount=100euro, or a link with yet another domain, depending on the selected institute.

Also, if the client device 9 has an application 12 capable of performing the communications that are necessary for the transaction with the selected institute, the redirection server 1 may redirect the request to a URL that activates the application 12 and provides the application 12 with the transaction details that were present in the payment link. For example, if the application 12 installed in client device 9 has custom URL scheme "bank1app", then the above-mentioned example request may be redirected by redirection server 1 to
bank1 app://paymentlink?to=1234&amount=100euro.

The redirection server 1 may comprise a network port 3 to communicate with client devices, for example through the Internet or another suitable network. Moreover, the redirection server 1 may comprise a controller 2, for example one or more central processor units, capable of executing software stored in a memory 4. The redirection server 1 may also be implemented as a system comprising a plurality of cooperating servers. The memory 4 is configured to store the addresses 5 of the servers, the custom URL schemes 6 of e.g. the applications or other systems that can handle the transaction. Moreover, the memory 4 is configured to store software code, including code 7 for receiving a request from a client device, and code 8 for redirecting the client device to an appropriate server or application, as explained herein, using the stored addresses 5 and/or custom URL schemes 6, and modifying these addresses 5 and/or URL schemes 6 such that they include the details regarding the transaction, that were present in the request received by the redirection server 1.

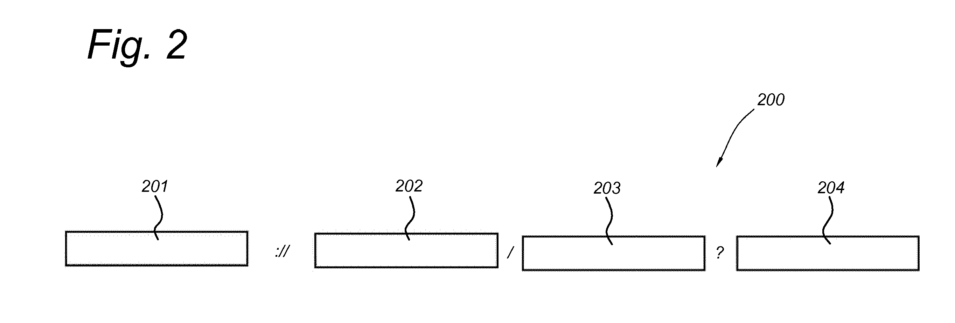

Fig. 2 shows components of a payment link 200. The illustrated payment link 200 has a protocol name 201, a domain name 202, a resource 203, and a query 204. For example, the application 12 and/or server 10, 11 is specified by the protocol name and the domain name 202, whereas the payment details are specified by the query 204. The resource 203 may contain an indication that the URL is a payment link. Alternative arrangements of the payment link 200 are also possible. For example, the payment details may be encoded in any one or more of the query 204, resource 203, and domain name 202. The person skilled in the art can configure alternative formats of the payment link.

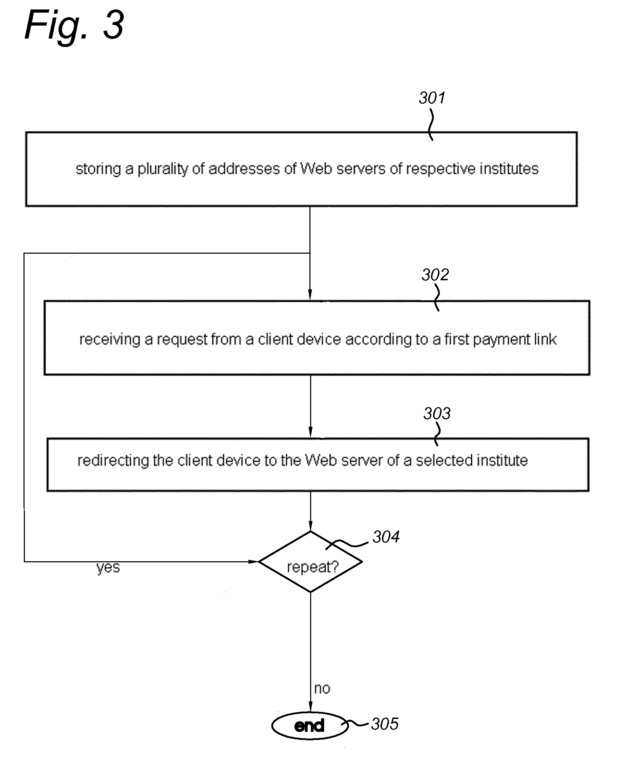

Fig. 3 illustrates aspects of a method of handling a payment link. The method is suitable for being performed by a server system, which can be a Web server. The method can comprise a step 301 of storing a plurality of addresses of Web servers of respective institutes. Step 301 may further comprise storing custom URL schemes of respective institutes. For example, a secured user interface can be provided which can be accessible remotely from the respective institutes by authorized users, who can enter the address and/or custom URL scheme of a particular institute. Other ways to collect and store a plurality of Web addresses and/or custom URL schemes can be implemented by a person skilled in the art based on the present disclosure.

In step 302, the server receives a request from a client device according to a first payment link. For example, this request is a HTTP request issued by a browser when the URL is input to the browser, or when a payment link, which can be part of a Web site, is clicked within a browser on a client device. The request can comprise information relating to a payment, the information including at least an identification of a bank account of a beneficiary of the payment. The information may further contain details regarding an amount to be paid, a currency unit (e.g. euro, dollar), a name of the beneficiary, a bank account and/or name of the payer. The payment link may contain further information, such as a description to accompany the payment, a payment ID

In step 303, the server redirects the client device to a selected institute of the respective institutes according to a second payment link.

To this end, the server may parse the received information for information that can be used to select one of the addresses or custom URL schemes. Alternatively, the server may send a list containing several options to the client device, so that the selection may be made using the client device. The second payment link may be composed by the server, and may comprise the address of the Web server or the custom URL scheme of the selected institute. The remaining information details about the transaction are copied into the second payment link by the server.

For example, the server may send a HTTP redirect message to the client device to realize the redirection.

In step 304, it is determined whether another request should be received. If so, the process continues from step 302 to receive the next request, which may originate from the same client device or from another client device. If no further request should be received in step 304, the process terminates at step 305.

The payment link may be provided by an organization or individual who desires to receive an amount from someone else. The payment link can be provided in textual format, or in a computer readable format, such as a QR-code, which can be scanned by the payer using a camera of the client device. The payment link may also be provided as a hyperlink embedded in a digital invoice, an email message, or a Web page.

The identification of the bank account can have the format of IBAN (International Bank Account Number). The information can also comprise a BIC (Business Identifier Code). These codes are well known in European banking.

A payment link can be a URL with, for example, the following components:
- protocol name
- domain name
- resource (optional)

Moreover, the payment link can comprise a query string containing, for example,
- an account number / account identification information of a receiving account holder
- a description or payment identifier (optional)
- an amount to be paid (optional)
- an account number / account identification information of a paying account holder (optional)

It will be noted that these information items do not have to be part of a query string. It can also be encoded as part of the resource and/or domain name, for example. To encode the information as part of the domain name, appropriate fictive sub-domains could be used.

For example, a payment link may be constructed as follows, using a fictional domain name "snspaymentlink.com":
https://snspaymentlink.com?to=NL08BANK0000000123&name=Welfare+Fund&amo unt=5.95&currency=euro&desc=Action+Philippines&ref=1234567

A central web server, referred to as a redirection server in this document, on the domain of the payment link (in this example snspaymentlink.com), converts the above link into a URL of the bank of the user, by replacing the protocol name (https:), host name(snspaymentlink.com) and/or resource of the URL with the corresponding details of the user's bank, and redirects the user to the web site of the user's bank, for example SNS Bank, using the converted URL:
https://www.snsbank.nl/paymentlink?to= NL08BANK0000000123&name=Welfare+Fund&amount=5.95&currency=euro&desc =Action+Philippines&ref=1234567

It is noted that the information regarding the transaction (in this case formatted as a query string "?to= NL08BANK0000000123&name=Welfare+Fund&amount=5.95&currency=euro&desc =Action+Philippines&ref1234567") is not modified at all; it is just a copy of the information comprised in the original payment link.

However, the protocol, domain name, and/or resource may be altered according to specifications of the selected institute.

For example, the protocol may be adapted to redirect a payment link to a mobile application installed on the client device, which may be for example an iPhone or an Android phone or tablet, using e.g. a custom URL scheme such as:
"nl.snsbank.paymentlink://snsbank.nl?to= NL08BANK0000000123 &name=Welfare+Fund&amount=5.95&currency=euro&desc=Action+Philippin es&ref=1234567".
Herein, "nl.snsbank.paymentlink" is the name associated with the application.

If the account number/account identification information of the paying account holder is provided in the URL, the redirection server may automatically determine the bank of the paying account holder based on the account information. In such a case, the web server may automatically redirect the user to the web page of the correct bank. Otherwise, the redirection server may provide a web page with a selection menu with the possible bank institutes. After the user selects his/her bank, the snspaymentlink.com URL is converted by the redirection server by replacing the domain name (and/or protocol, resource) with the particulars specified by that bank. The selection of the redirection may also be based on information stored in the client device, such as information about installed applications and/or an identifier of the client device.

The online banking Web site (or app) of each individual participating bank is adapted to support the payment link. In particular, upon receiving a request based on a redirected payment link in the format described above, the online banking web site or app authenticates the user of the client device, using e.g. a password, and presents the payment details from the payment link to the user by means of the client device, and optionally allows the user to modify and/or add to the information. For example, the user can select an account to pay from, or enter an amount to be paid.

The particulars that are specific for each institute, such as the address, which may comprise a protocol, host, and resource where the payment link functionality of each institute is available are provided to the redirection web server and stored therein. Also, a custom URL scheme specific for each institute may be provided to the redirection web server and stored therein.

In an example implementation, on activation of a payment link, the online banking web site sets up a secure session, allows the user to log in (if the user is not already logged in), and directly presents the payment function to the user. This means that a form is presented to the user on a client device to initiate a money transfer from the user's account ("from:") to the recipient's account ("to:") The form is automatically pre-populated with the information from the fields that were provided in the query string. This includes at least the recipient account number and name. Also, other fields such as amount, payment identifier and/or description are pre-populated if present in the query string. The user is allowed to visually inspect the pre-populated form, and to make changes and additions to the presented values. If a payment link contains erroneous information, the user may be alerted by either the redirection web server or the online banking web server. Alternatively each of these servers may reject the erroneous payment link without processing it. If an encrypted payment link is chosen, the encrypted query is decrypted by the server of the banking institute. The redirection server does not necessarily need to decrypt the details of the transaction, because the redirection server merely redirects the request to the appropriate online banking server or application.

The user is expected to verify the payment details by means of visual inspection of the pre-populated form, before authorizing the payment. Also, the bank and/or the redirection server may implement blacklists, whitelists, suspicious patterns, and other security features, to avoid misuse.

Further, the transaction details (which may be represented by the query string) may be encrypted and/or digitally signed. In such a case, the details are not readable from the URL by third parties. Also, cryptographic techniques or other security features may be applied to prevent any undesired disclosure and/or manipulation of transaction details.

Some or all aspects of the invention may be suitable for being implemented in form of software, in particular a computer program product. Such computer program product may comprise a storage media, such as a memory, on which the software is stored. Also, the computer program may be represented by a signal, such as an optic signal or an electro-magnetic signal, carried by a transmission medium such as an optic fiber cable or the air. The computer program may partly or entirely have the form of source code, object code, or pseudo code, and may be suitable for being executed by a computer system. For example, the code may be executable by one or more processors.

The examples and embodiments described herein serve to illustrate rather than limit the invention. The person skilled in the art will be able to design alternative embodiments without departing from the scope of the claims. Reference signs placed in parentheses in the claims shall not be interpreted to limit the scope of the claims. Items described as separate entities in the claims or the description may be implemented as a single hardware or software item combining the features of the items described. The transaction details and domain names given in the example URLs in this document are fictional and are provided only to illustrate the techniques disclosed herein.

## Claims

1. A system for handling a payment link, comprising a redirection server configured for:
storing a plurality of addresses of servers or custom URL schemes of respective institutes;
receiving a request from a client device according to a first payment link comprising information relating to a payment, the information including at least an identification of a bank account of a beneficiary of the payment; and
redirecting the client device to a selected institute of the respective institutes according to a second payment link comprising the address of the server or the custom URL scheme of the selected institute, wherein the second payment link further comprises the information relating to the payment.

2. The system of claim 1, wherein the second payment link comprises an exact copy of the information relating to the payment included in the first payment link.

3. The system of claim 1, wherein the request comprises a HTTP request containing the information in a resource or query portion of the HTTP request, and wherein the step of redirecting comprises issuing a HTTP redirect response to the client device, the HTTP redirect response comprising:
the location of the server of the selected institute or a custom URL scheme, and
the information relating to the transaction in a resource or query portion of the HTTP redirect response.

4. The system of claim 1, wherein the information relating to the payment is encrypted, and the redirected request comprises a copy of the encrypted information.

5. The system of claim 3, wherein the HTTP redirect comprises a literal copy of the information relating to the transaction.

6. The system of claim 1, wherein the redirection server is configured to send a list of the plurality of institutes to the client device, to select the selected institute using the client device.

7. The system of claim 1, further comprising the servers of the respective institutes, wherein each of the servers of the respective institutes and the redirection server is configured to accept a common format for encoding information relating to a payment in a payment link.

8. The system of claim 7, wherein each of the servers of the respective institutes is configured to, upon receiving a payment link comprising valid information in the common format for encoding information relating to a payment,
display a user interactive form for correcting, supplementing, and/or confirming the payment information by the client device, and perform the payment if a user of the client device is authenticated as an account holder at the respective institute.

9. The system of claim 1, wherein the second payment link comprising the custom URL scheme of the selected institute is configured to redirect the client device to an application installed on the client device, wherein the application is configured to, upon receiving a payment link comprising valid information in the common format for encoding information relating to a payment,
display a user interactive form for correcting, supplementing, and/or confirming the payment information by the client device, and perform the payment if a user of the client device is authenticated as an account holder at the respective institute.

10. The system of claim 1, wherein the redirection server is a Web server.

11. A method of handling a payment link, comprising:
storing a plurality of addresses of servers or custom URL schemes of respective institutes;
receiving a request from a client device according to a first payment link comprising information relating to a payment, the information including at least an identification of a bank account of a beneficiary of the payment; and
redirecting the client device to a selected institute of the respective institutes according to a second payment link comprising the address of the server or the custom URL scheme of the selected institute, wherein the second payment link further comprises the information relating to the payment.

12. A computer program product comprising instructions stored on a non-tangible media, wherein said computer program is configured to, when executed by a server, to
store a plurality of addresses of servers or custom URL schemes of respective institutes;
receive a request from a client device according to a first payment link comprising information relating to a payment, the information including at least an identification of a bank account of a beneficiary of the payment; and
redirect the client device to a selected institute of the respective institutes according to a second payment link comprising the address of the server or the custom URL scheme of the selected institute, wherein the second payment link further comprises the information relating to the payment.
